# EUROPEAN PATENT SPECIFICATION

(11) **EP 1 235 197 B1**
(45) Date of publication and mention of the grant of the patent: **25.08.2010**
(21) Application number: 01945776.1
(22) Date of filing: 02.07.2001
(51) Int. Cl.: G09F 9/00, G09F 9/30, G01D 7/00, G01D 13/00, B60K 35/00, B60Q 3/04, G01D 11/28

(54) **DISPLAY ELEMENT AND DISPLAY DEVICE USING DISPLAY ELEMENT**
ANZEIGEELEMENT UND ANZEIGEVORRICHTUNG
ELEMENT D'AFFICHAGE ET DISPOSITIF D'AFFICHAGE UTILISANT LEDIT ELEMENT D'AFFICHAGE

(30) Priority: 24.07.2000 JP 2000221568; 27.02.2001 JP 2001052563
(43) Date of publication of application: 28.08.2002
(73) Proprietor: NIPPON SEIKI CO., LTD., Nagaoka-shi, Niigata 940-8580 (JP)
(72) Inventor: KOJIMA, Tetsuaki, c/o R & D Center, Nagaoka-shi, Niigata 940-2141 (JP); NAGANO, Keiichi, c/o R & D Center, Nagaoka-shi, Niigata 940-2141 (JP); SHIMA, Osamu, c/o R & D Center, Nagaoka-shi, Niigat a 940-2141 (JP); ITAGAKI, Masao, c/o R & D Center, Nagaoka-shi, Niigat ta 940-2141 (JP); KOBAYASHI, Mitsugu, c/o R & D Center, Nagaoka-shi, Niigata 940-2141 (JP); UMEZAWA, Yukio, c/o R & D Center, Nagaoka-shi, Niigata940-2141 (JP)
(74) Representative: Jackson, Richard Eric
(86) International application number: PCT/JP2001/005736
(87) International publication number: WO 2002/009073

(56) References cited:
- DE-A1- 19 757 564
- DE-A1- 19 845 579
- GB-A- 2 056 067
- JP-A- 2 166 420
- JP-A- 58 176 677
- JP-A- 2000 111 674
- JP-U- 3 044 624

## Description

### TECHNICAL FIELD

The present invention relates to a dot matrix type display element and a display device using the dot matrix type display element.

### BACKGROUND ART

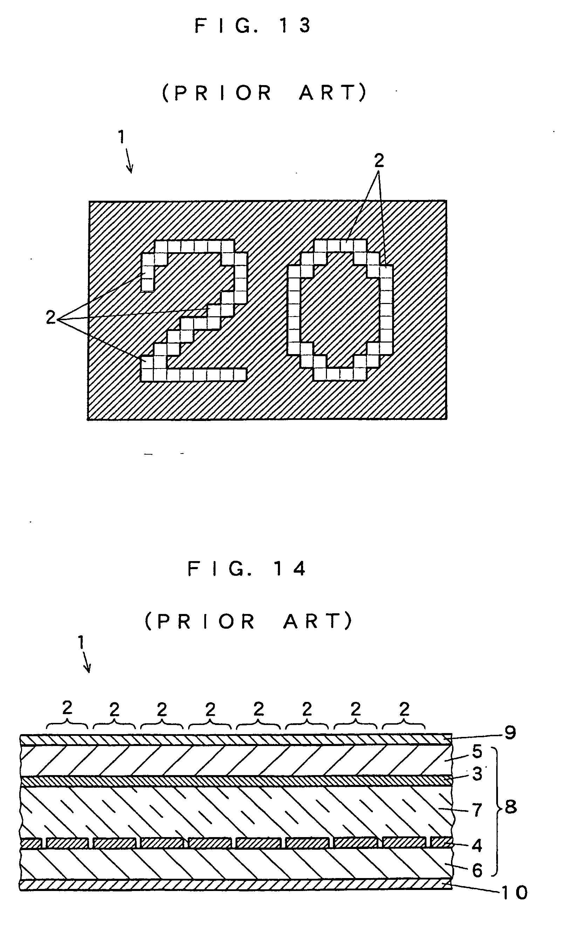

Hitherto, there is a dot matrix type liquid crystal display element 1 as shown in Fig. 13. The liquid crystal display element 1 includes a number of pixels 2 provided in a matrix form. As shown in Fig. 14, the liquid crystal display element 1 is such that polarizing plates 9 and 10 are bonded to both surfaces of a liquid crystal cell 8 in which a liquid crystal 7 is sealed between a pair of translucent substrates 5 and 6 provided with transparent electrode films 3 and 4. The respective transparent electrode films 3 and 4 are formed into such a stripe shape that they are orthogonal to each other, and portions where the transparent electrode films 3 are opposite to the transparent electrode films 4 become the pixels 2. The liquid crystal display element 1 can display various figures and characters (including numerals) by switching on/off the respective pixels 2.

However, since the contour of a displayed figure or character becomes sawtooth, there has been a problem that the figure or the character is disfigured. That is, since the shape of each of the pixels 2 is square, in the case where the contour of the figure or the character, which is displayed by selectively switching on/off the pixels 2, is an oblique line or a curved line, the figure or the character becomes sawtooth.

GB 2 056 067 A discloses a display system which uses an electro-optical cell formed by a liquid whose optical properties are variable between two spaced transparent plates provided with transparent electrodes, one of the plates carrying an opaque foil with transparent windows therein and at the rear of the cell an illuminating device.

DE 197 57 564 discloses a display unit with a pointer driven by a measuring mechanism, for analogue display of a measured value in co-operation with fixed scale markings and variable scale information. The display may be a dot matrix display or a liquid crystal display cell.

The present invention has been made in view of the problem, and provides a display device which can display a character and a figure having an unsawtooth contour.

### DISCLOSURE OF THE INVENTION

The present invention provides a display device as recited in the claims.

### BRIEF DESCRIPTION OF THE DRAWINGS

Figs. 1 to 5 are views showing an embodiment not according to the invention, in which Fig. 1 is a front view of a liquid crystal display element, Fig. 2 is a front view of a display device, Fig. 3 is a sectional view of the display device, Fig. 4 is a sectional view showing the liquid crystal display element, and Fig. 5 is a primary part enlarged view of the liquid crystal display element.
Fig. 6 is a primary part enlarged view of a liquid crystal display element, showing an embodiment of the present invention.
Figs. 7 to 10 are views showing an embodiment not according to the invention, in which Fig. 7 is a sectional view of a display device, Fig. 8 is a perspective view of a display plate and a liquid crystal display element, Fig. 9 is a sectional view of the display plate and the liquid crystal display element, and Fig. 10 is a primary part enlarged view of the display plate.
Fig. 11 is a primary part enlarged view of a display plate, showing an embodiment of the invention.
Fig. 12 is a perspective view of a display plate and a liquid crystal display element, showing an embodiment not according to the invention.
Figs. 13 and 14 are views showing the prior art, in which Fig. 13 is a front view of a liquid crystal display element, and Fig. 14 is a sectional view of the liquid crystal display element.

### BEST MODE FOR CARRYING OUT THE INVENTION

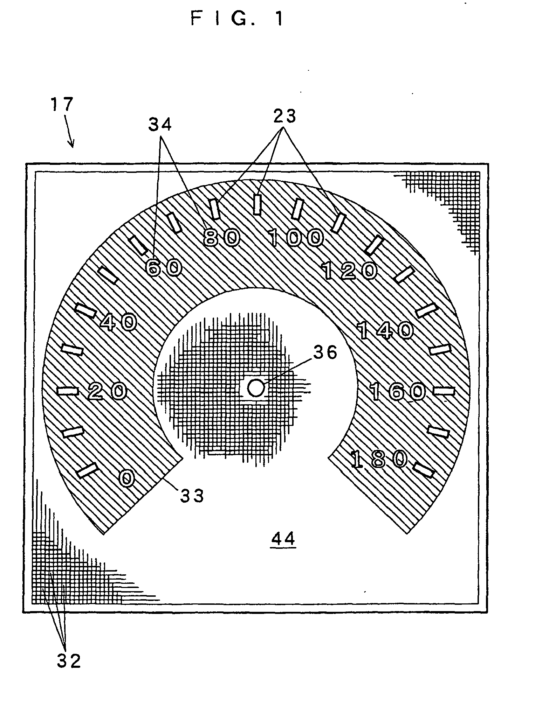

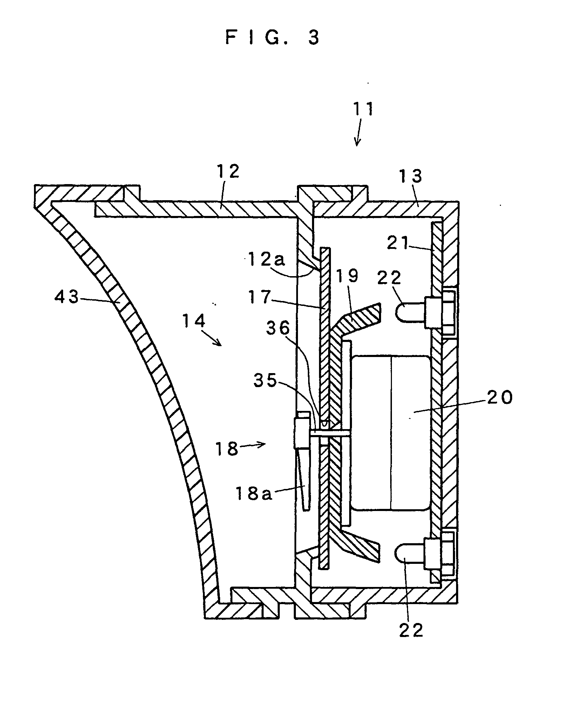

Hereinafter, embodiments in which the present invention is applied to an on-vehicle display device, will be described with reference to the accompanying drawings. Figs. 1 to 5 are views showing a first embodiment not according to the invention.

Reference numeral 11 designates a housing, and this housing 11 includes a facing member 12 and a case body 13. The housing 11 contains three indicating instruments, that is, a speed indicator 14, a fuel indicator 15, and a water temperature indicator 16. The speed indicator 14 is larger than the fuel indicator 15 and the water temperature indicator 16, and is disposed between the fuel indicator 15 and the water temperature indicator 16.

The speed indicator 14 includes a liquid crystal display element 17, a pointer 18, a lightguide member 19, and a stepping motor 20 (pointer driving means). The pointer 18 is rotated by the stepping motor 20, and indicates an index part 23 (fixed display part) of the liquid crystal display element 17.

Reference numeral 21 designates a circuit board, and the stepping motor 20 is mounted on this circuit board 21. Reference numeral 22 designates a bulb (light emitting element), and this bulb 22 is connected to the circuit board 21. The liquid crystal display element 17 is illuminated through transmission of the light of the bulb 22. The light of the bulb 22 is guided by the lightguide member 19 to the pointer 18, and an indicating part 18a of the pointer 18 becomes luminous.

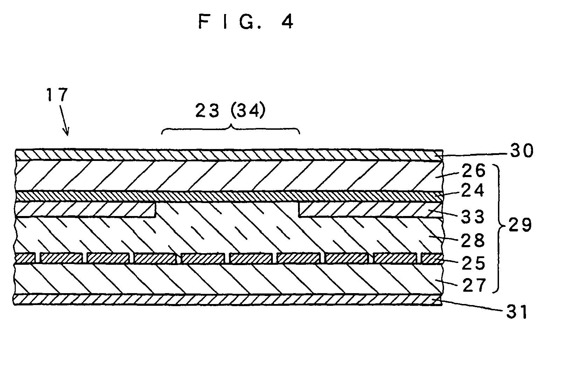

The liquid crystal display element 17 is such that polarizing plates 30 and 31 are bonded to both surfaces of a liquid crystal cell 29 in which a liquid crystal 28 is sealed between a pair of translucent substrates 26 and 27 on which transparent electrode films 24 and 25 are formed (refer to Fig.4). The respective transparent electrode films 24 and 25 are formed into such a stripe shape that they are orthogonal to each other, and places where the transparent electrode films 24 are opposite to the transparent electrode films 25 become pixels 32. Reference numeral 33 designates a light shielding layer (light shielding part), and openings of this light shielding layer 33 are fixed display parts (index parts 23 and numerals 34). A hole part 36 through which a rotation shaft 35 of the stepping motor 20 passes is formed in the liquid crystal display element 17.

The fuel indicator 15 and the water temperature indicator 16 respectively include character plates 37 and 38 and pointers 39 and 40. The character plates 37 and 38 are respectively such that black printing is applied to substrates made of translucent resin (for example, polycarbonate) except for index parts 41 and 42. The pointers 39 and 40 are rotated by stepping motors (not shown), and indicate the index parts 41 and 42 of the character plates 37 and 38.

Reference numeral 43 designates a protection cover, and this protection cover 43 is fixed to the facing member 12 by a fixing pawl. In the facing member 12, circular openings 12a, 12b and 12c are respectively formed in the places corresponding to the liquid crystal display element 17, and the character plates 37 and 38.

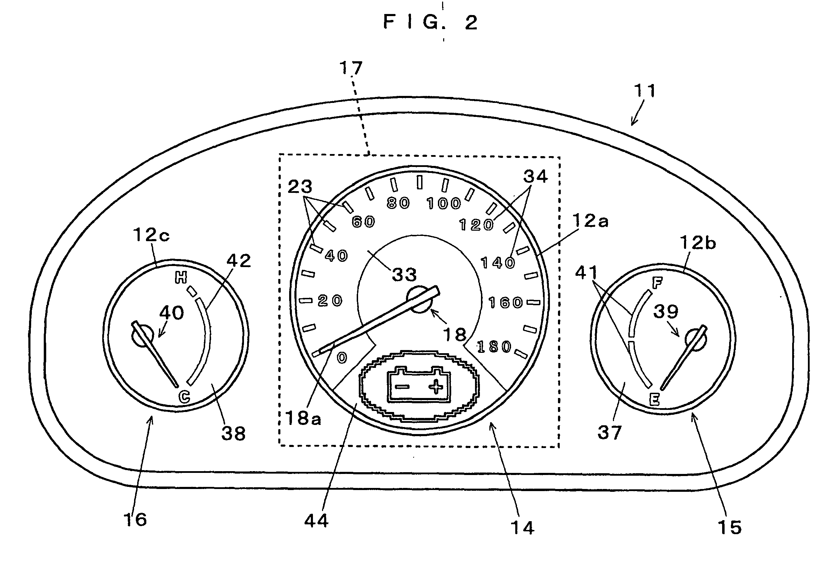

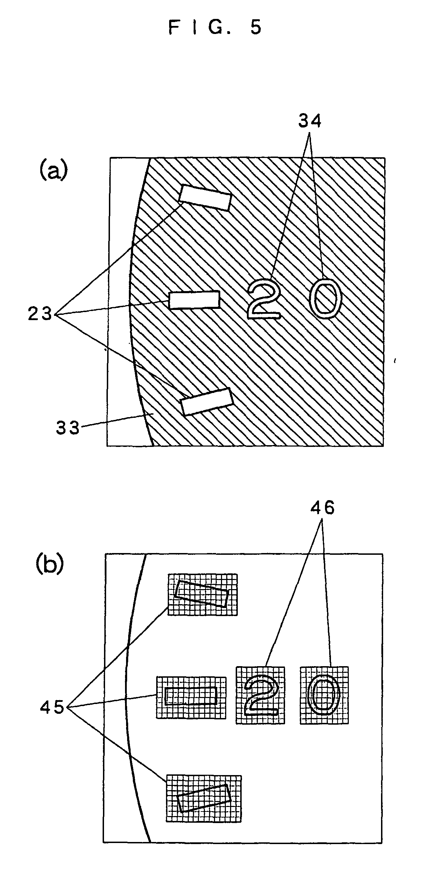

The liquid crystal display element 17 is of a negative display type in which the pixel 32 applied with a voltage is brought into a transmission state, and the pixel 32 applied no voltage is in a light shielding state. The liquid crystal display element 17 includes a variable display part 44 made of a region where the light shielding layer 33 is not provided, and this variable display part 44 displays alarm information such as a battery voltage shortage (see Fig. 2). Besides, as shown in Fig. 5, in order to bring the fixed display portions 23 and 34 into the transmission state, rectangular regions 45 and 46 wider than the fixed display portions 23 and 34 are brought into the transmission state.

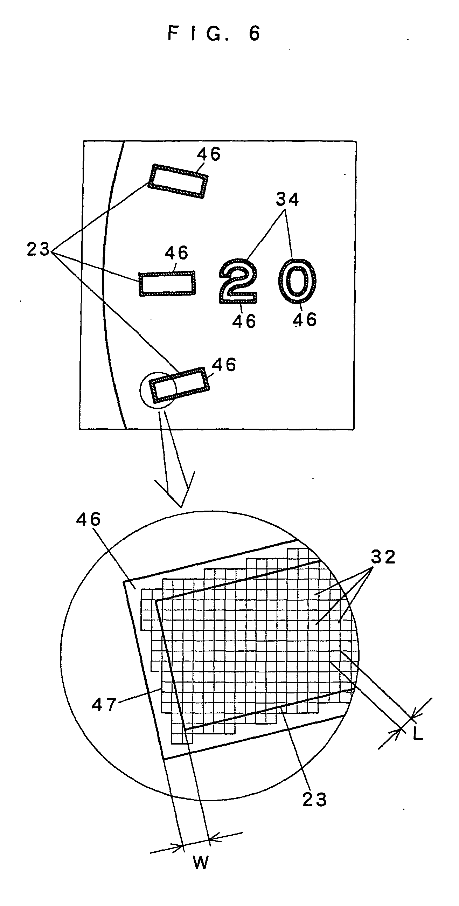

Fig. 6 is a view showing a second embodiment according to the invention. The second embodiment is different from the first embodiment only in a range in which a light shielding layer 46 is provided, and the other structure is the same as the first embodiment.

The light shielding layer 46 is provided around each of the fixed display parts 23 and 34 to have a predetermined width W and a frame shape. The predetermined width W of the light shielding layer 46 is larger than a diagonal length L of a pixel 32. In the liquid crystal display element 17, in order to bring the fixed display parts 23 and 34 into the transmission state, regions 47 respectively wider than the fixed display parts 23 and 34 and narrower than the light shielding layers 46 are brought into the transmission state.

According to the first embodiment or the second embodiment, the fixed display parts 23 and 34 and the variable display part 44 can be provided on one display element (the liquid crystal display element 17), and the contours of the fixed display parts 23 and 34 are formed of the openings of the light shielding layer 33, so that the contours of the fixed display parts 23 and 34 do not become sawtooth. Incidentally, although the light shielding layer 33 of the respective embodiments is laminated on the transparent electrode 24, for example, it may be formed on the front side surface of the translucent substrate 26 or may be formed on the front side surface of the polarizing plate 30.

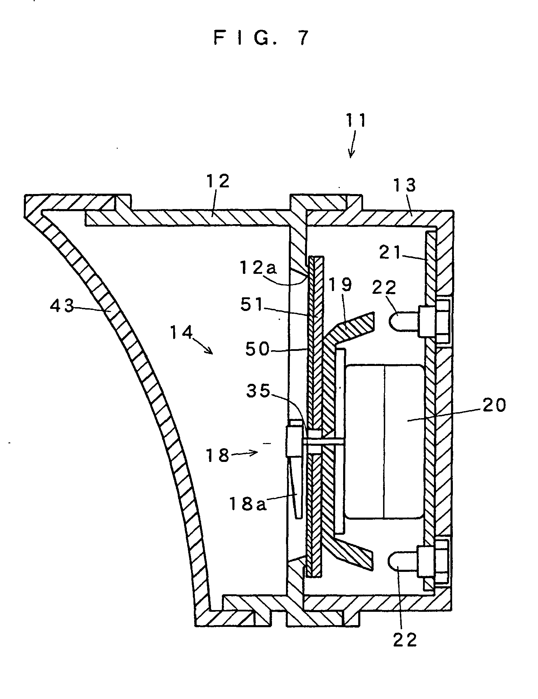

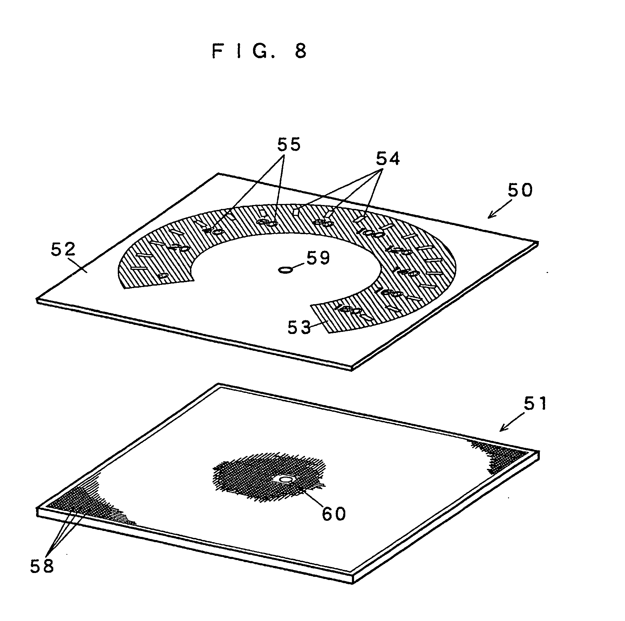

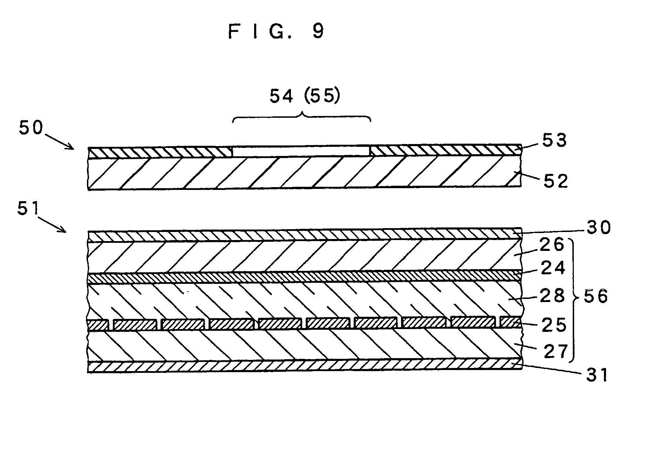

Figs. 7 to 10 are views showing a third embodiment not according to the invention. The third embodiment is different from the first embodiment only in a polarizing plate 50 and a liquid crystal display element 51, and the other structure is similar to the first embodiment, and accordingly, the same symbols are given to the same portions as those of the first embodiment, and the explanation is omitted.

The display plate 50 is such that a light shielding part 53 is formed by printing on the front surface of a substrate 52 made of translucent resin (for example, polycarbonate). The light shielding part 53 is substantially arc-shaped when viewed from the front of the display plate 50. Openings are provided in the light shielding part 53, and the openings are index parts 54 and characters 55.

The liquid crystal display element 51 is such that polarizing plates 30 and 31 are bonded to both surfaces of a liquid crystal cell 56 in which a liquid crystal 28 is sealed between a pair of translucent substrates 26 and 27 on which transparent electrode films 24 and 25 are formed. The respective transparent electrode films 24 and 25 are formed into such a stripe shape that they are orthogonal to each other, and places where the transparent electrode films 24 are opposite to the transparent electrode films 25 become pixels 58.

Hole parts 59 and 60 through which a rotation shaft 35 of a stepping motor 20 passes are respectively formed in the display plate 50 and the liquid crystal display element 51.

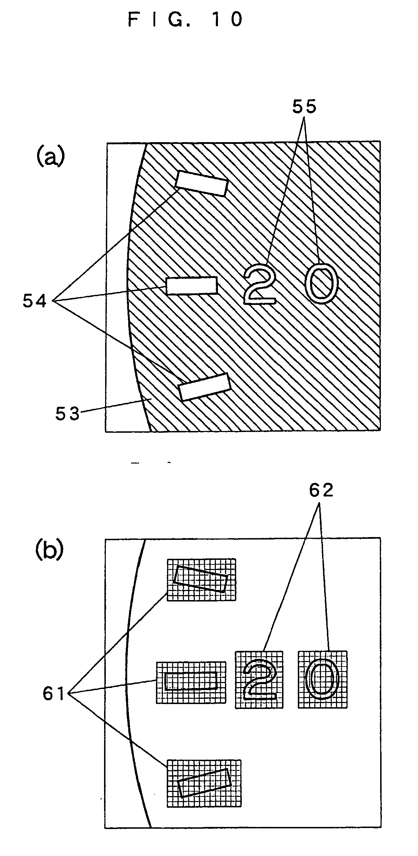

The liquid crystal display element 50 is of a negative display type in which a figure or a character to be displayed is brought into a transmission state, and for example, display alarm information such as a battery voltage shortage is displayed. Besides, as shown in Fig. 10, in order to make light pass through the index part 54 and the character 55 of the display plate 50, rectangular regions 61 and 62 wider than the index part 54 and the character 55 are brought into the transmission state.

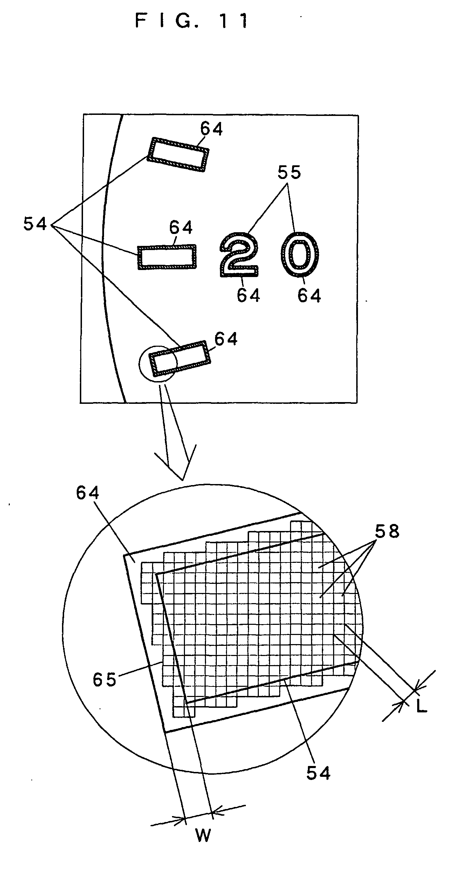

Fig. 11 is a view showing a fourth embodiment according to the invention. The fourth embodiment is different from the third embodiment only in a range in which a light shielding part 64 is provided, and the other structure is similar to the third embodiment.

The light shielding part 64 is provided around each of the index part 54 and the character 55 to have a predetermined width W and a frame shape. The predetermined width W of the light shielding part 64 is larger than a diagonal length L of the pixel 58. In the liquid crystal display element 51, in order to make light pass through the index part 54 and the character 55 of the display part 50, a region 65 wider than the index part 54 and the character 55 and narrower than an outer line of the light shielding part 64 is brought into the transmission state.

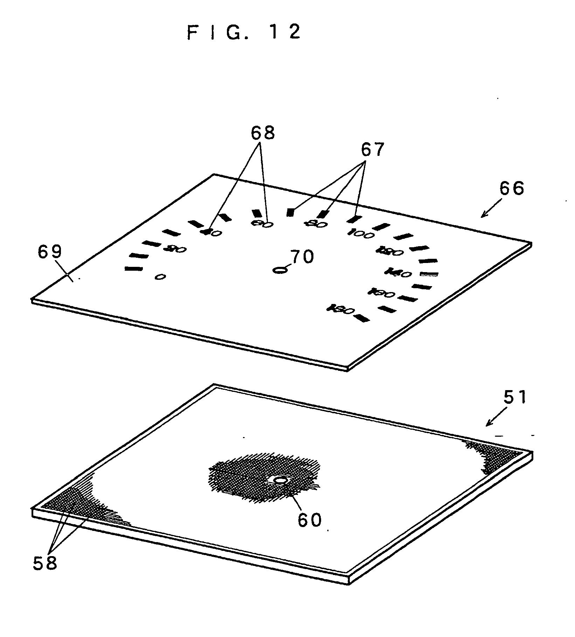

Fig. 12 is a view showing a fifth embodiment not according to the invention. The fifth embodiment is different from the third embodiment only in a display plate 66, and the other structure is similar to the third embodiment.

The display plate 66 is such that an index part 67 and a character 68 made of a colored layer are formed by printing on a substrate 69. A hole part 70 through which a rotation shaft 35 of a stepping motor 20 passes is formed in the display plate 66.

According to the third to fifth embodiments, the fixed display parts (the index parts 54 and 67, the characters 55 and 68) and the variable display part of the liquid crystal display element 51 can be provided in the speed indicator 14, and the contours of the fixed display parts do not become sawtooth. Incidentally, although the liquid crystal display element 51 of the third to fifth embodiments is disposed behind the polarizing plate 50 or 66, the liquid crystal display element 51 may be disposed in front of the polarizing plate 50 or 66, and the same operation and effect can be obtained.

Besides, in the first to fifth embodiments, although the pointer driving means is the stepping motor 20, for example, it may be a crossed coil type movement. Besides, although the light emitting element is the bulb 22, for example, it may be a light emitting diode. Besides, although the display element is the liquid crystal display element 17 or 51, for example, it may be an organic EL display element.

### POSSIBILITY OF INDUSTRIAL APPLICATION

The present invention can be applied to a display device, and is particularly suitable for an on-vehicle display device.

## Claims

1. A display device comprising:
a pointer (18) including an indicating part (18a);
pointer driving means (20) for rotating the pointer (18); and
a display element (17) including a plurality of index parts (23) disposed for indication by the indicating part (18a),
**characterized in that**
the display element (17) comprises a pair of translucent substrates (26, 27), stripe-shaped transparent electrode films (24, 25) respectively formed on the translucent substrates (26, 27) to define a plurality of pixels (32), and a light shielding part (46) provided on at least one of the translucent substrates (26, 27), and
wherein each of said index parts (23) comprises a light shielding part (46) formed to frame a group of pixels (32), said light shielding part (46) having a width, W, larger than a diagonal length, L, of a pixel (32), and
wherein said light shielding part (46) shields transmission from pixels (32) and from portions of pixels (32) disposed beneath said light shielding part (46) so as to provide an index part (23) having a substantially smooth contour when said group of pixels (32) is selectively brought into a transmission state.

2. A display device according to claim 1, **characterized in that** the display element (17) includes a hole part (36) formed in a place corresponding to a rotation shaft (35) of the pointer driving means (20).

3. A display device according to claim 1, **characterized in that** a light emitting element (22) for illuminating the display element (17) from behind is provided.

## Patentansprüche

1. Displayvorrichtung, umfassend:
einen Zeiger (18), der einen Anzeigeteil (18a) enthält;
Zeigertreiber- bzw. -antriebsmittel (20) zum Drehen des Zeigers (18); und
ein Displayelement (17), das eine Mehrzahl von Indexteilen (23) enthält, die zur Anzeige durch den Anzeigeteil (18a) angeordnet sind,
**dadurch gekennzeichnet, dass**
das Displayelement (17) ein Paar durchsichtiger bzw. durchscheinender Substrate (26, 27), streifenförmige transparente Elektrodenfilme (24, 25), die jeweils an den durchscheinenden Substraten (26, 27) gebildet sind, um eine Mehrzahl von Pixeln (32) zu definieren, und ein Lichtabschirmteil (46) umfasst, das an zumindest einem der durchscheinenden Substrate (26, 27) vorgesehen ist, und
wobei jeder der Indexteile (23) ein Lichtabschirmteil (46) umfasst, das gebildet ist, um eine Gruppe von Pixeln (32) einzurahmen, wobei das Lichtabschirmteil (46) eine Breite, W, die größer ist als eine diagonale Länge, L, eines Pixels (32) aufweist, und
wobei das Lichtabschirmteil (46) eine Transmission von Pixeln (32) und von Abschnitten von Pixeln (32) abschirmt, die unterhalb des Lichtabschirmteils (46) angeordnet sind, um ein Indexteil (23) bereitzustellen, das eine im Wesentlichen glatte Kontur aufweist, wenn die Gruppe von Pixeln (32) selektiv in einen Transmissionszustand gebracht wird.

2. Displayvorrichtung nach Anspruch 1, **dadurch gekennzeichnet, dass** das Displayelement (17) ein Lochteil (36) enthält, das an einer Stelle gebildet ist, die einer Rotationswelle (35) der Zeigerantriebsmittel (20) entspricht.

3. Displayvorrichtung nach Anspruch 1, **dadurch gekennzeichnet, dass** ein lichtemittierendes Element (22) zum Beleuchten des Displayelements (17) von hinten vorgesehen ist.

## Revendications

1. Dispositif d'affichage comprenant :
■ un pointeur (18) doté d'une partie d'indication (18a) ;
■ des moyens d'entraînement de pointeur (20) destinés à faire tourner le pointeur (18) ; et
■ un élément d'affichage (17) doté d'une pluralité de parties d'index (23) disposées pour une indication fournie par la partie d'indication (18a) ;
**caractérisé en ce que** :
l'élément d'affichage (17) comprend une paire de substrats translucides (26, 27), des films d'électrode transparents en forme de bandes (24, 25) formés respectivement sur les substrats translucides (26, 27) de manière à définir une pluralité de pixels (32), et une partie de protection vis-à-vis de la lumière (46) disposée sur l'un au moins des substrats translucides (26, 27) ; et
dans lequel chacune desdites parties d'index (23) comprend une partie de protection vis-à-vis de la lumière (46) formée de manière à encadrer un groupe de pixels (32), ladite partie de protection vis-à-vis de la lumière (46) présentant une largeur, W, plus grande qu'une longueur de diagonale, L, d'un pixel (32) ; et
dans lequel ladite partie de protection vis-à-vis de la lumière (46) protège une transmission à partir de pixels (32) et à partir de parties de pixels (32) disposés sous ladite partie de protection vis-à-vis de la lumière (46) de manière à fournir une partie d'index (23) qui présente un contour sensiblement lisse lorsque ledit groupe de pixels (32) est amené de manière sélective dans un état de transmission.

2. Dispositif d'affichage selon la revendication 1, **caractérisé en ce que** l'élément d'affichage (17) comprend une partie de trou (36) formée en une place qui correspond à un arbre de rotation (35) des moyens d'entraînement de pointeur (20).

3. Dispositif d'affichage selon la revendication 1, **caractérisé en ce qu'**il est fourni un élément électroluminescent (22) destiné à éclairer l'élément d'affichage (17) par derrière.
